# EUROPÄISCHE PATENTSCHRIFT

(11) **EP 1 985 473 B1**
(45) Veröffentlichungstag und Bekanntmachung des Hinweises auf die Patenterteilung: **16.06.2010**
(21) Anmeldenummer: 08006836.4
(22) Anmeldetag: 04.04.2008
(51) Int. Cl.: B60D 1/54

(54) **Anhängekupplung mit einer Betätigungseinrichtung**
Draw bar with an actuation device
Attelage doté d'un dispositif d'actionnement

(30) Priorität: 25.04.2007 DE 102007019488
(43) Veröffentlichungstag der Anmeldung: 29.10.2008
(73) Patentinhaber: WESTFALIA - Automotive GmbH, 33378 Rheda-Wiedenbrück (DE)
(72) Erfinder: Grebe, Kai-Joachim, 72649 Wolfschlugen (DE); Heugel, Bernd, 73666 Baltmannsweiler (DE); Vahle, Dirk, 59320 Ennigerloh (DE)
(74) Vertreter: Bregenzer, Michael

(56) Entgegenhaltungen:
- EP-A- 1 826 033
- DE-A1- 10 347 817
- DE-A1-102006 043 428
- DE-A1-102006 043 429

## Beschreibung

Die Erfindung betrifft eine Anhängekupplung mit einem an einem Zugfahrzeug befestigten oder befestigbaren Halter, einem an dem Halter mit einer Verriegelungseinrichtung zumindest in einer zum Ziehen eines Anhängers vorgesehenen Arbeitsstellung verriegelbaren, einen Kugelkopf aufweisenden Kugelhals und einer Betätigungseinrichtung zur Betätigung der Verriegelungseinrichtung zwischen einer Verriegelungsstellung, bei der die Verriegelungseinrichtung den Kugelhals an dem Halter verriegelt, und einer Freigabestellung, bei der die Verriegelungseinrichtung den Kugelhals zu einem Bewegen in eine für den Nichtgebrauch vorgesehene Ruhestellung frei gibt, wobei die Betätigungseinrichtung ein auf ein Betätigungsorgan zum Betätigen der Verriegelungseinrichtung zwischen der verriegelungsstellung und der Freigabestellung wirkendes Zahnrad-Getriebe mit einem Zahnradteil aufweist, das durch eine Axialverstellung zwischen einer Betätigungsstellung, in der ein Zahnradabschnitt des Zahnradteils mit einem am Ende des Betätigungsorgans angeordneten Betätigungsorgan-Zahnabschnitt kämmt, und einer Nicht-Betätigungsstellung verstellbar ist, in der der Zahnradabschnitt außer Eingriff mit dem Betätigungsorgan-Zahnabschnitt ist.

Eine derartige Anhängekupplung ist der Anmelderin bekannt.

Eine Anhängekupplung mit einer manuellen Betätigungseinrichtung ist auch aus DE 203 05 807 U1 bekannt und wird bei Zugfahrzeugen eingesetzt.

Ein Betätigungsorgan zur Verwendung bei einer z.B. aus EP 1 475 253 A1 bekannten Anhängekupplung ist ein Zug-/Druck-Bowdenzug, der zwischen dem am Fahrzeugheck angeordneten Halter und der manuellen Betätigungseinrichtung im Gepäckraum des Zugfahrzeuges verläuft. Durch die Betätigungseinrichtung ist der Halter entriegelbar, sodass der Kugelhals beispielsweise zwischen einer Arbeitsstellung und einer Ruhestellung verschwenkbar ist.

Die Bedienung der Betätigungseinrichtung ist allerdings ergonomisch nicht optimal: Der Bediener muss nämlich zunächst mit einem Handrad das Zahnradteil von der Nicht-Betätigungsstellung in die Betätigungsstellung verlagern, bevor er durch eine Drehbedienung die Verriegelungseinrichtung von der Verriegelungsstellung in die Freigabestellung bringen kann. Aus Sicherheitsgründen ist es nämlich nicht vorteilhaft, das Zahnradteil stets in der Betätigungsstellung zu lassen, weil sonst die Verriegelungseinrichtung über das Betätigungsorgan, zum Beispiel den Zug-/Druck-Bowdenzug, auf die Betätigungseinrichtung im Sinne eines Lösens der Verriegelungseinrichtung zurückwirken kann, wenn die Anhängekupplung beim Anhängebetrieb belastet ist, sodass sich sogar der Kugelhals von dem Halter aus der Arbeitsstellung lösen kann. Dies ist ein Sicherheitsrisiko.

Es ist daher die Aufgabe der vorliegenden Erfindung, bei einer Anhängekupplung der eingangs genannten Art die Bedienung unter Beibehaltung der Betriebssicherheit zu vereinfachen.

Zur Lösung der Aufgabe ist bei einer Anhängekupplung der eingangs genannten Art vorgesehen, dass die Betätigungseinrichtung ein Betätigungsgetriebe aufweist, das eine Drehung einer Betätigungswelle zur Drehbetätigung des Zahnradteils in eine Axialverstellung des Zahnradteils in Richtung der Betätigungsstellung umsetzt.

Das Betätigungsgetriebe setzt zweckmäßigerweise in umgekehrter Richtung eine Drehbetätigung des Zahnradteils in eine Axialverstellung desselben in Richtung der Nicht-Betätigungsstellung um.

Das Betätigungsgetriebe arbeitet vorzugsweise sequentiell, das heißt, es bewirkt zunächst die Axialverstellung des Zahnradteils in Richtung der Betätigungsstellung, bevor der Betätigungsorgan-Zahnabschnitt betätigbar ist.

In der Verriegelungsstellung ist der Kugelhals vorzugsweise spielfrei an dem Halter verriegelt. Es ist auch möglich, dass der Kugelhals in der Verriegelungsstellung zwar ein Spiel bezüglich des Halters aufweist, aber nicht in die Ruhestellung bewegt werden kann. Beispielsweise sind Formschlusskonturen zwischen Kugelhals und Halter mit Spiel aber dennoch im Sinne eines Verriegelns in Eingriff.

Das Betätigungsorgan ist zweckmäßigerweise ein Linearbetätigungsorgan, beispielsweise ein Druck-Organ und/oder ein Zugorgan, beispielsweise ein Bowdenzug.

Die Betätigungseinrichtung ist vorteilhafterweise im Innenraum, beispielsweise Gepäckraum, des Zugfahrzeuges angeordnet oder anordenbar.

Besonders bevorzugt ist ein manuelles Konzept zur Bedienung der Betätigungseinrichtung, bei dem diese ein Handgriffteil zu einer Drehbetätigung des Betätigungsgetriebes aufweist. Die Erfindung ist aber auch bei einem motorischen Antriebskonzept vorteilhaft, wobei ein motorischer Antrieb lediglich eine Drehbewegung erzeugen muss, während die Axialverstellung des Zahnradteils durch das Betätigungsgetriebe erfolgt.

Das Handgriffteil oder bei einem motorischen Antrieb beispielsweise ein Zahnrad sind bei der Drehbetätigung längs ihrer jeweiligen Drehachse axial ortsfest. Zwar wird das Zahnradteil axial zwischen der Betätigungsstellung und der Nicht-Betätigungsstellung verlagert. Das zum Antrieb dieser Axialverstellung erforderliche Bauteil, beispielsweise Handgriffteil oder Zahnrad, bleibt axial ortsfest. Dadurch ist bei einem manuellen Bedienkonzept die Ergonomie verbessert, bei einem motorischen Antrieb die mechanische Auslegung vereinfacht.

Zweckmäßigerweise ist das Betätigungsgetriebe zumindest teilweise in einem Innenraum des Handgriffteils angeordnet. Diese Bauweise ist platzsparend. Bewegte Bauteile sind jedenfalls vorzugsweise gekapselt, beispielsweise durch das Handgriffteil und/oder durch ein Gehäuse der Betätigungseinrichtung.

Bei dem Betätigungsgetriebe sind verschiedene Bauweisen denkbar, beispielsweise Seilzuggetriebe, Zahnradgetriebe, Kulissengetriebe und dergleichen.

Bevorzugt ist eine im später beschriebenen Ausführungsbeispiel erläuterte Kulissenführung, bei der zumindest eine zumindest abschnittsweise schräg verlaufende Kulisse vorhanden ist. Es versteht sich, dass mehrere Kulissen vorgesehen sein können. In der jeweiligen Kulisse ist ein Führungsvorsprung, beispielsweise ein Bolzenende, vorhanden. Die Kulisse(n) verlaufen zumindest abschnittsweise schräg zu der Drehachse des Zahnradteils.

Die Kulisse oder der Führungsvorsprung können beispielsweise unmittelbar an dem Handgriffteil oder an einem mit dem Handgriffteil drehfest verbundenen Führungsbauteil angeordnet sein. Beispielsweise bildet eine Hohlwelle das Führungsbauteil, an der die Kulisse angeordnet ist.

Ferner ist es möglich, dass das Betätigungsgetriebe ein Zahngetriebe umfasst. Das Zahngetriebe hat beispielsweise eine Schrägverzahnung mit schräg zur Drehachse des Zahnradteils verlaufenden Zähnen. Zum Beispiel sind an dem Zahnradteil oder einem mit diesem verbundenen Getriebebauteil schräg verlaufende Zähne, während an dem Handgriffteil eine Geradverzahnung vorgesehen ist, oder umgekehrt.

Das Betätigungsgetriebe hat, wie erläutert, vorzugsweise mindestens eine Hohlwelle, in der eine Innenwelle drehbar gelagert angeordnet ist. Das Zahnradteil ist mit der Innenwelle drehfest verbunden oder umfasst sogar das Zahnradteil. Die Hohlwelle kann separat oder, was bevorzugt ist, auf der Innenwelle drehbar gelagert sein. Das Handgriffteil ist vorzugsweise mit der Hohlwelle drehfest verbunden oder kann die Hohlwelle bilden.

Das Handgriffteil, die Hohlwelle und die Innenwelle sowie das Zahnradteil sind zweckmäßigerweise koaxial. Das Zahnradteil wird beispielsweise durch ein Achsteil gebildet, das an der Innenwelle angeordnet oder durch die Innenwelle gebildet ist.

Zweckmäßigerweise umfasst das Betätigungsgetriebe mindestens eine zwischen dem Handgriffteil und einem Gehäuse der Betätigungseinrichtung wirksame, schräg zur Drehachse des Zahnradteils verlaufende Schrägfläche. Diese Schrägfläche kann beispielsweise an dem Handgriffteil oder an einem Gehäuse der Betätigungseinrichtung angeordnet sein. Beispielsweise ist eine solche Schrägfläche an einer Stirnseite des Handgriffteils angeordnet, die an eine korrespondierende Führungsfläche des Gehäuses angrenzt. Bei dieser Bauweise stützt sich sozusagen die Schrägfläche des Handgriffteils an der Führungsfläche des Gehäuses der Betätigungseinrichtung ab, sodass das Handgriffteil axial nicht ortsfest bleibt, wenn es das Zahnradteil von der Betätigungsstellung in die Nicht-Betätigungsstellung verlagert oder umgekehrt.

Vorzugsweise hat das Zahnradteil einen Blockierabschnitt, der in einer Blockierstellung des Zahnradteils eine Bewegung des Betätigungsorgan-Zahnabschnitts aus einer der Verriegelungsstellung entsprechenden Axialposition in Richtung der Freigabestellung blockiert. Die Blockierstellung entspricht beispielsweise der Nicht-Betätigungsstellung. Dadurch ist auf Seiten der Betätigungseinrichtung eine zusätzliche Sicherheit geschaffen, damit die Verriegelungseinrichtung beim Betrieb der Anhängekupplung nicht in die Freigabestellung gelangt. Der Blockierabschnitt weist beispielsweise keine Zahnung auf, sodass der Betätigungs-Zahnabschnitt sich mit dem Blockierabschnitt sozusagen verkeilt, wenn eine Rückwirkung von der Verriegelungseinrichtung auf die Betätigungseinrichtung in Richtung der Freigabestellung auftritt. Für die Blockierfunktion kann der Blockierabschnitt aber auch einen Zahnabschnitt mit einem unterschiedlichen Zahnabstand als der Betätigungsorgan-Zahnabschnitt aufweisen.

Die Achsen zur Axialverstellung des Zahnradteils zwischen der Betätigungs- und der Nicht-Betätigungsstellung und die Verstellachse des Betätigungsorgan-Zahnabschnittes, die zugleich eine Rückwirkungsachse bei Belastung der Anhängekupplung ist, sind zweckmäßigerweise derart winkelig, beispielsweise rechtwinkelig, dass bei Belastung des Kugelhalses eine Rückwirkung über das Betätigungsorgan, das beispielsweise ein Zug-/Druck-Bowdenzug ist, auf das Zahnradteil keine Axialverstellung desselben in Richtung der Betätigungsstellung bewirkt. Vorzugsweise ist in diesem Fall auch keine solche Schrägverzahnung zwischen dem Zahnradteil und dem Betätigungsorgan-Zahnabschnitt vorgesehen, die eine Axialverstellung des Betätigungsorgan-Zahnabschnittes in Richtung der Rückwirkungsachse in eine Axialverstellung des Zahnradteils aus der Blockierstellung umsetzt. Somit bleibt das Zahnradteil in seiner Blockierstellung und wird nicht etwa unbeabsichtigt in Richtung der Betätigungsstellung verlagert, die ein Lösen der Verriegelungseinrichtung ermöglicht.

Die Betätigungseinrichtung weist zweckmäßigerweise eine Federanordnung auf, die auf das Zahnradteil in Richtung der Blockierstellung wirkt. Die Federanordnung wird beispielsweise beim Verstellen in die Betätigungsstellung gespannt und wirkt in Richtung der Nicht-Betätigungsstellung, die vorzugsweise einer Blockierstellung entspricht.

In diesem Zusammenhang sei betont, dass es prinzipiell möglich ist, dass die Betätigungseinrichtung in der Nicht-Betätigungsstellung keine Blockierwirkung hat, was beim nachfolgend beschriebenen Ausführungsbeispiel jedoch nicht der Fall ist.

Die Federanordnung kann beispielsweise eine Feder sein, die unmittelbar das Zahnradteil axial in Richtung der Nicht-Betätigungsstellung oder der Blockierstellung betätigt. Es ist aber auch möglich, dass die Federanordnung eine Feder umfasst, die sich einerseits an dem Handgriffteil und andererseits an dem Zahnradteil drehfest abstützt, beispielsweise mit diesem drehfest verbunden ist. Diese Feder ist vorzugsweise eine Drehfeder, die durch Torsion spannbar ist und dann in Richtung der Nicht-Betätigungsstellung wirkt. Beispielsweise ist die Feder mit einem Bolzen verbunden, der mit dem Zahnradteil fest verbunden ist und in die Kulisse am Führungsbauteil, beispielsweise der Hohlwelle, eingreift. Auf der anderen Seite ist diese Feder zweckmäßigerweise mit dem Führungsbauteil oder unmittelbar mit dem Handgriffteil drehfest verbunden.

Der Kugelhals kann in der Freigabestellung von dem Halter entfernbar sein. Ferner ist es möglich, dass der Halter zwischen der Arbeitsstellung und der Ruhestellung beweglich gelagert ist, beispielsweise schwenkbar und/oder linear verlagerbar.

Als weitere Komfort- und/oder Sicherheitsmaßnahme ist vorteilhaft, dass die Betätigungseinrichtung eine elektrische Signalisierungseinrichtung zum Signalisieren der Blockierstellung und/oder der Betätigungsstellung des Zahnradteils aufweist. Die Betätigungseinrichtung umfasst beispielsweise einen durch das Zahnradteil, den Handgriff oder ein sonstiges axial mit dem Zahnradteil bewegungsfest verbundenes Bauteil betätigbaren elektrischen Schalter, beispielsweise einen Mikroschalter, einen Abstandssensor, einen optischen Sensor oder dergleichen. Die Signalisierungseinrichtung kann auch eine akustische oder optische Anzeige umfassen oder eine solche Anzeige ansteuern, die im Zugfahrzeug ohnehin vorhanden ist, beispielsweise im Armaturenbereich.

Die Signalisierungseinrichtung erzeugt beispielsweise ein Warnsignal, wenn das Zahnradteil außerhalb der Nicht-Betätigungsstellung oder der Blockierstellung ist. Somit gibt die Signalisierungseinrichtung dann kein Signal, wenn die Betätigungseinrichtung die Nicht-Betätigungsstellung oder Blockierstellung einnimmt. Es ist aber auch eine Signalisierung einer korrekten Blockierstellung oder Nicht-Betätigungsstellung denkbar, beispielsweise für eine vorbestimmte Nachlaufzeit, wenn die Verriegelung des Kugelhalses an dem Halter vorgenommen worden ist. Somit ist die Signalisierungseinrichtung nicht in Dauerbetätigung und konsumiert nicht unnötig Strom.

Nachfolgend werden Ausführungsbeispiele der Erfindung anhand der Zeichnung erläutert. Es zeigen:
- Figur 1: eine Seitenansicht einer Anhängekupplung mit einer im Gepäckraum des Zugfahrzeugs angeordneten erfindungsgemäßen Betätigungseinrichtung,
- Figur 2: eine Draufsicht auf die Betätigungseinrichtung gemäß Figur 1,
- Figur 3: eine perspektivische Seitenansicht der Betätigungseinrichtung gemäß Figur 2 mit abgenommenem Handgriffteil,
- Figur 4: die Betätigungseinrichtung in einer teilweise geschnittenen Ansicht entsprechend etwa einer Schnittlinie S-S entsprechend etwa der Draufsicht gemäß Figur 2 in Nicht-Betätigungsstellung,
- Figur 5: die Betätigungseinrichtung ähnlich wie in Figur 4, jedoch bei teilweiser Verstellung in Richtung der Betätigungsstellung, und
- Figur 6: die Betätigungseinrichtung in einer Ansicht entsprechend den Figuren 4 und 5 in Betätigungsstellung.

Eine Anhängekupplung 10 enthält einen an einem Halter 11 schwenkbar gelagerten Kugelhals 12, an dessen vorderem, freien Ende ein Kugelkopf 13 zum Anhängen eines Anhängers 14 angeordnet ist. Die Anhängekupplung 10 ist an einer Trägeranordnung 15 eines Zugfahrzeugs 16 befestigt. Die Trägeranordnung 15 enthält Seitenträger 17 zur Anbindung an Fahrzeuglängsholme des Zugfahrzeugs 16, beispielsweise eines Personenkraftwagens, sowie einen sich zwischen den Seitenträgern 17 erstreckenden Querträger 18, an dem der Halter 11 befestigt ist. Der Querträger 18 ist hinter einem Stoßfänger 19 angeordnet. In der Ruheposition der Anhängekupplung 10, bei der der Kugelkopf 13 unter das Zugfahrzeug 16 geschwenkt ist, befindet sich der Kugelhals 12 in einem durch den Stoßfänger 19 im Wesentlichen verdeckten Bereich unterhalb des Zugfahrzeugs 16 und/oder hinter dem Stoßfänger 19.

Der Halter 11 enthält ein Schwenklager 20 für den Kugelhals 12, der mit einem Schwenklagerteil 22 um eine Schwenkachse 21 an dem Halter 11 schwenkbar gelagert ist.

Die Anhängekupplung 10 hat ferner einen Steckdosenhalter 23 mit einer in der Zeichnung nicht dargestellten Steckdose, die ebenfalls schwenkbar ist, nämlich an einem Steckdosenhalter-Schwenklager 24. Vor den Steckdosenhalter 23 steht ein Mitnehmerarm 25 vor, der von Mitnehmern 26 am Schwenklagerteil 22 beim Schwenken des Kugelhalses 12 von der Arbeitsstellung in die Ruhestellung und umgekehrt mitgenommen wird.

Zumindest in der Arbeitsstellung, zweckmäßigerweise auch in der Ruhestellung, ist der Kugelhals 12 an dem Halter 11 mit einer Verriegelungseinrichtung 30 verriegelbar. Im Innern des Schwenklagers 20 ist ein Sperrbolzen 31 längsverstellbar gelagert, der Verriegelungskörper 32, beispielsweise Walzen oder Kugeln, in seiner Verriegelungsstellung nach radial außen in nicht dargestellte Verriegelungskörper-Aufnahmen, beispielsweise Kugelkalotten, am Schwenklagerteil 22 verdrängt und somit das Schwenklagerteil 22 beziehungsweise den Kugelhals 12 am Halter 11 verriegelt. Der Sperrbolzen 31 ist durch eine nicht dargestellte Feder in seine Verriegelungsstellung vorgespannt.

Mit Hilfe einer Betätigungseinrichtung 40, die über ein Betätigungsorgan 41, beispielsweise ein Zugorgan, auf die Verriegelungseinrichtung 30 wirkt, kann diese von der Verriegelungsstellung in eine Freigabestellung verstellt werden, bei der der Kugelhals 12 bezüglich des Halters 11 beweglich, nämlich schwenkbar ist. Das Betätigungsorgan 41 ist beispielsweise ein Bowdenzug, insbesondere ein Zug-/Druck-Bowdenzug, der nicht nur Zugkräfte, sondern auch Druckkräfte übertragen kann. Dadurch ist es beispielsweise möglich, dass die Betätigungseinrichtung 40 nicht nur in Richtung der Freigabestellung, sondern auch in umgekehrter Richtung in die Verriegelungsstellung auf die Verriegelungseinrichtung 30 wirkt. Im Vordergrund steht aber eine zusätzliche Blockierfunktion der Betätigungseinrichtung 40, die über das Druckkräfte übertragende Betätigungsorgan 41 möglich ist und später noch erläutert wird. Das Betätigungsorgan 41 ist beispielsweise durch einen der Seitenträger 17 hindurchgeführt und endet an der Betätigungseinrichtung 40, die zweckmäßigerweise im Fahrgastraum oder Gepäckraum des Zugfahrzeugs 16 vor Verschmutzung gesichert und bequem durch einen Bediener ergreifbar angeordnet ist.

Das Betätigungsorgan 41 ist in eine Aufnahme 43 eines Gehäuses 44 der Betätigungseinrichtung 40 eingesteckt. Das Betätigungsorgan 41 wird durch eine Rastklemme 45 an der Aufnahme 43 gehalten, die mit Hakenaufnahmen 46 verrastet ist. Das Gehäuse 44 ist beispielsweise ein Kunststoffgehäuse. Das Gehäuse 44 ist zweckmäßigerweise mit einer Rippenstruktur 47 verstärkt.

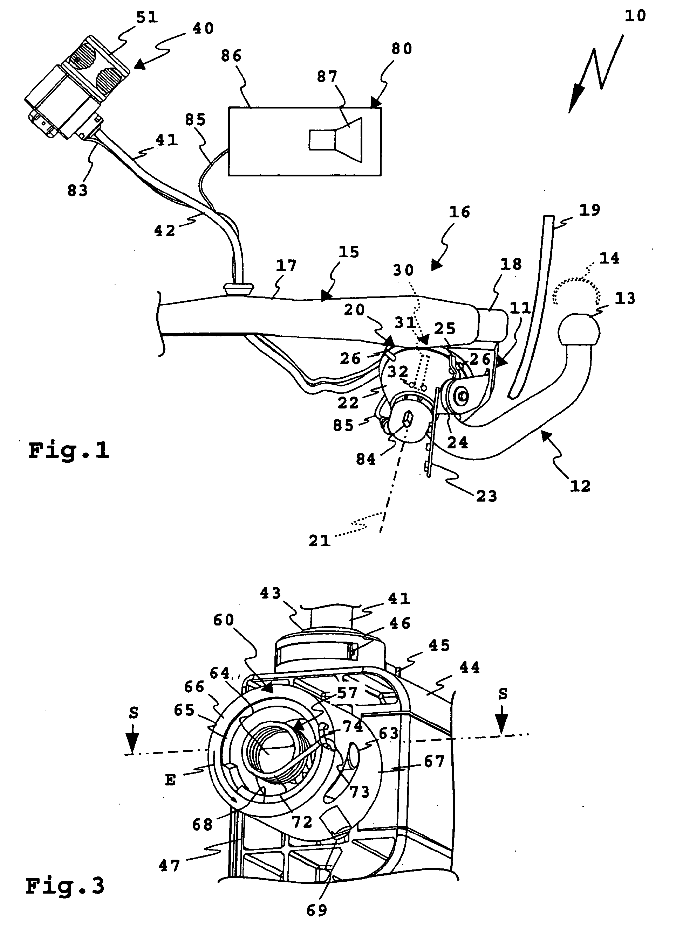

Die Betätigung der Anhängekupplung 10 gestaltet sich einfach. Durch Lösen der Verriegelungseinrichtung 30 mit Hilfe der Betätigungseinrichtung 40 schwenkt der Kugelhals zunächst aus seiner Arbeitsstellung gemäß Figur 1 oder auch aus seiner in der Zeichnung nicht dargestellten Ruhestellung in eine mittlere untere Lage, wo er vom Bediener ergriffen und in die Arbeits- oder Ruhestellung weitergeschwenkt werden kann, in der dann die Verriegelungseinrichtung 30 den Kugelhals 12 selbsttätig verriegelt.

Die Betätigungseinrichtung 40 ist eine manuelle Betätigungseinrichtung, in der ein Zahnradgetriebe 48 zur Betätigung des Betätigungsorgans 41 angeordnet ist. Ein Zahnradteil 49, das eine in dem Gehäuse 44 drehbar gelagerte Welle umfasst, kämmt mit einem Betätigungsorgan-Zahnabschnitt 50 am Ende des Betätigungsorgans 41. Der Zahnabschnitt 50 wird beispielsweise durch ein Zahnabschnittsteil gebildet, das am Zugseil im Innern des Betätigungsorgans 41 angeordnet ist.

Das Zahnradteil 49 ist mit einem Handgriffteil 51 bedienbar. Eine Drehachse 52 des Zahnradteils 49 verläuft winkelig, im Ausführungsbeispiel rechtwinkelig, zu einer Längsverstellachse 53 des Zahnabschnitts 50 beziehungsweise des Betätigungsorgans 41 im Bereich der Betätigungseinrichtung 40.

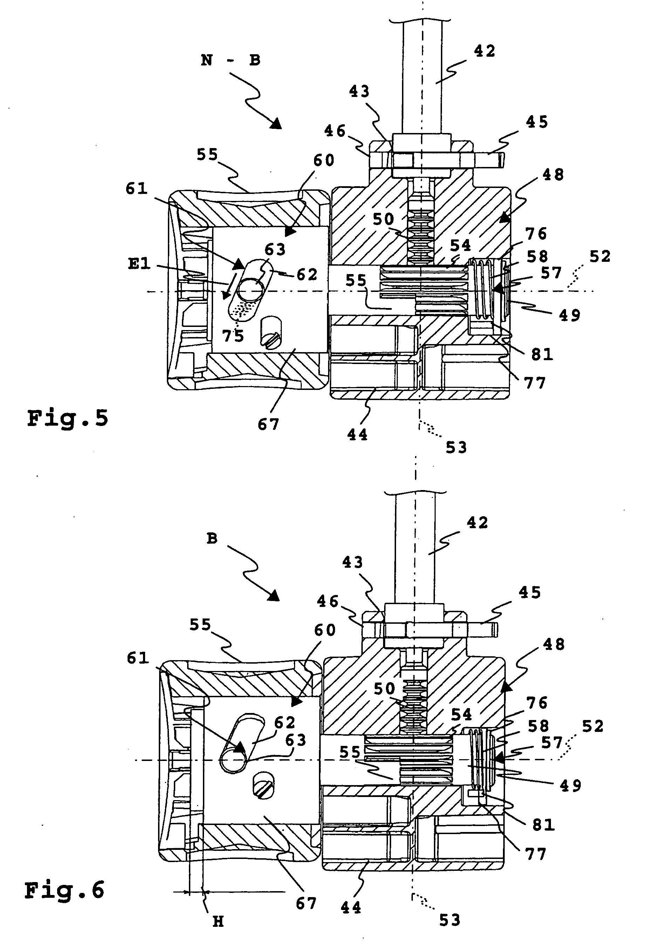

In einer Betätigungsstellung B, die in Figur 6 dargestellt ist, kämmt ein Zahnradabschnitt 54 des Zahnradteils 49 mit dem Betätigungsorgan-Zahnabschnitt 50. Dann kann durch eine Drehbetätigung des Handgriffteils 51 in einer Drehrichtung E der Zahnradabschnitt 54 gedreht und der Betätigungsorgan-Zahnabschnitt 50 axial entlang der Längsverstellachse 53 verstellt und somit die Verriegelungseinrichtung 30 von der Verriegelungsstellung in die Entriegelungsstellung oder Freigabestellung verstellt werden.

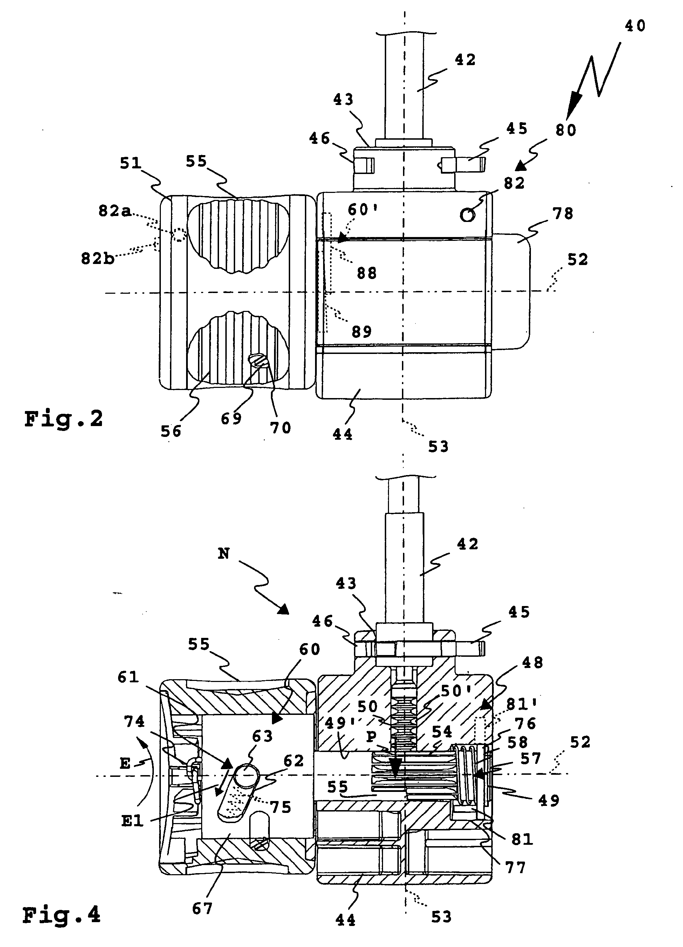

Wenn das Zahnradteil jedoch entlang seiner Drehachse 52 in die in Figur 4 dargestellte Nicht-Betätigungsstellung axial verstellt ist, ist ein Blockierabschnitt 55 des Zahnradteils 49 im Bereich des Betätigungsorgan-Zahnabschnitts 50 positioniert. Der Blockierabschnitt 55 hat keine Zahnung, sodass der Zahnabschnitt 50 in dieser Blockierstellung das Zahnradteil 49 nicht verdrehen kann und somit blockiert ist.

Der Zahnabschnitt 50 ist verschieblich, insbesondere gleitverschieblich, in einer Führungsausnehmung 50' geführt. Die Führungsausnehmung 50' verläuft rechtwinkelig zu einer Lageraufnahme 49' der Drehlagerung für das Zahnradteil 49. Der Zahnabschnitt 50 verkeilt sozusagen das Zahnradteil 49 in der Lageraufnahme 49', wenn vom Zugorgan in Richtung eines Pfeils P Kräfte auf den Blockierabschnitt 55 wirken.

Das Ergreifen des Handgriffteils 51 wird durch Griffflächen 56 erleichtert. Das Handgriffteil 51 ist beispielsweise ein Kunststoffteil.

Das Handgriffteil 51 wirkt nicht unmittelbar auf das Zahnradteil 49, sondern über ein Betätigungsgetriebe 60. Das Betätigungsgetriebe 60 erleichtert die Bedienung der Betätigungseinrichtung 40 folgendermaßen: Das Betätigungsgetriebe 60 bewirkt beim Drehen des Handgriffteils 51 in Richtung E zunächst eine axiale Verstellung der Zahnradteils 49 in der Zeichnung nach links, das heißt von der Nicht-Betätigungsstellung um einen Hub H in die Betätigungsstellung, oder, weil die Betätigungseinrichtung 40 zusätzlich eine Blockierfunktion hat, von der Blockierstellung (Figur 4) in die Nicht-Blockier- oder Betätigungsstellung (Figur 6). Wenn das Zahnradteil 49 in der Betätigungsstellung ist, überträgt das Betätigungsgetriebe 60 Drehungen des Handgriffteils 51 auf das Zahnradteil 49.

Das Betätigungsgetriebe 60 enthält eine Kulissenführung 61 mit einer Kulisse 62, in die ein Führungsvorsprung 63 eingreift. Die Kulisse 62 verläuft schräg zur Drehachse 52. Der Führungsvorsprung 63 wird durch einen Bolzen 64 gebildet, der mit einer Innenwelle 65 drehfest verbunden ist. Die Innenwelle wiederum ist mit dem Zahnradteil 49 verbunden oder bildet das Zahnradteil 49. Beispielsweise ist die Zahnung des Zahnradteils 49 an einem Drehvorsprung der Innenwelle 65 angeordnet, der in der Lageraufnahme 49' des Gehäuses 44 drehbar gelagert ist.

Eine Hohlwelle 66 ist auf der Innenwelle 65 drehbar gelagert. Die Hohlwelle 66 bildet ein Führungsbauteil 67. An der Hohlwelle 66 ist nämlich die Kulisse 62 angeordnet. Die Hohlwelle 66 ist vorzugsweise drehbar auf der Innenwelle 65 gelagert. Durch den eingesteckten Bolzen 64 ist die Hohlwelle 66 gegen Verlieren an der Innenwelle 65 gesichert.

Auf der Hohlwelle 66 sitzt wiederum drehfest das Handgriffteil 51. Das Handgriffteil 51 bildet sozusagen eine Kappe für die Hohlwelle 66 und umschließt diese vollständig, sodass zwischen dem Gehäuse 44 und dem Handgriffteil 51 ein enger Abstand vorhanden ist. Bewegliche Bauteile des Betätigungsgetriebes 60 sind jedenfalls nach außen hin zweckmäßigerweise vollständig gekapselt.

Das Handgriffteil 51 ist verdrehsicher mit der Hohlwelle 66 verbunden. Dies ist beispielsweise mit einer Verzahnung zwischen den beiden Bauteilen realisierbar. Ferner ist es möglich, das Handgriffteil 51 auf die Hohlwelle 66 aufzukleben. Beim Ausführungsbeispiel ist eine Wurmschraube als eine Verdrehsicherung durch eine Bohrung 70 des Handgriffteils 51 hindurch in die Hohlwelle 66 eingeschraubt und steht in die Bohrung 70 vor.

Das Zahnradteil 49 wird durch eine Federanordnung 57 in die Nicht-Betätigungsstellung, die zugleich die Blockierstellung ist, vorgespannt. Die Federanordnung 57 enthält beispielsweise eine Feder 58, die sich einerseits am Gehäuse 44 und andererseits am Zahnradteil 49 abstützt. Die Feder 58 ist beispielsweise eine Schraubenfeder, die von dem Zahnradteil 49 durchdrungen ist. Die Feder 58 stützt sich einerseits am Gehäuse 44 und andererseits direkt oder indirekt am Zahnradteil 49 ab. Beispielsweise stützt sich die Feder 58 an einem durch z.B. eine Scheibe gebildeten Betätigungsvorsprung 76, der vor das Zahnradteil 49 vorsteht, und andererseits am Boden einer Ausnehmung 77 des Gehäuses 44 ab. Die Ausnehmung 77 ist im Vergleich zu der Lageraufnahme 49' größer, sodass dort die Feder 58 Platz findet. Die Ausnehmung 77 ist zweckmäßigerweise durch eine Schutzkappe 78 verschlossen.

Die Federanordnung 57 enthält weiterhin eine Drehfeder 72, die mit dem Handgriffteil 51 drehfest verbunden ist. Ein Federende 73 der Drehfeder 72 wird von einer Federhalterung 74 an der Hohlwelle 66, beispielsweise an deren Stirnseite, gehalten, wobei die Hohlwelle 66 drehfest mit dem Handgriffteil 51 verbunden ist.

Bei einer Drehbetätigung des Handgriffteils 51 in Richtung E wandert der Führungsvorsprung 63 in der Kulisse 62 schräg in Richtung eines Pfeils E1 in der Kulisse 62, was eine Axialverstellung des Zahnradteils 49 in der Zeichnung nach links in die Betätigungsstellung bewirkt. Dabei werden die Drehfeder 72 und die Feder 58 gespannt. Wenn der Bediener das Handgriffteil 51 loslässt, wirkt die Federanordnung 57 auf das Zahnradteil 49 in Richtung der Blockierstellung. Die Feder 58 wirkt unmittelbar, die Drehfeder 72 über das Betätigungsgetriebe 60 auf das Zahnradteil 49. Beide Federn 58, 72 wirken somit in Richtung der Blockierstellung, was eine zusätzliche Betriebssicherheit der Anhängekupplung 10 zur Folge hat.

Die Federanordnung 57 kann optional auch andere oder zusätzliche Federn enthalten, beispielsweise eine Feder 75 in der Kulisse 62, die sich einerseits am Führungsvorsprung 63 und andererseits an einem Endanschlag der Kulisse 62 abstützt.

Als weitere Sicherheitsmaßnahme hat die Anhängekupplung 10 eine Signalisierungseinrichtung 80. Die Signalisierungseinrichtung 80 umfasst einen Sensor 81, beispielsweise einen elektrischen Schalter, der die jeweilige Axialposition des Zahnradteils 49 zur Ermittlung der Betätigungsstellung oder Nicht-Betätigungsstellung desselben abtastet. Der Sensor 81 tastet beispielsweise die Position des Betätigungsvorsprungs 76 ab. Beispielsweise ist der Sensor 81 zwischen dem Betätigungsvorsprung 76 und dem Boden der Ausnehmung 77 angeordnet. Alternativ wäre es auch möglich, den Sensor 81 durch den radialen Außenumfang des Betätigungsvorsprungs 76 zu betätigen, was beispielsweise bei einem optionalen Schalter oder Sensor 81' der Fall ist.

Die Signalisierungseinrichtung 80 enthält ferner optische Anzeigemittel 82, beispielsweise eine Leuchtdiode. Wenn das Zahnradteil 49 außerhalb der Nicht-Betätigungsstellung ist, das heißt, die Verriegelungseinrichtung 30 nicht in Richtung der Freigabestellung blockiert, wird dies vom Sensor 81 ermittelt, und das Anzeigemittel 82 leuchtet. Das Anzeigemittel 82 ist zum Beispiel im Gehäuse 44 angeordnet und für einen Bediener beim Bedienen des Handgriffteils 51 sichtbar. Alternativ oder zusätzlich zu dem Anzeigemittel 82 können auch Anzeigemittel 82a und/oder 82b am Handgriffteil 51 angeordnet sein, die leuchten, wenn das Zahnradteil 49 außerhalb der Nicht-Betätigungsstellung ist. Das Anzeigemittel 82a ist am Außenumfang, das Anzeigemittel 82b an einer Stirnseite des Handgriffteils 51 angeordnet.

Ferner enthält die Signalisierungseinrichtung 80 einen weiteren Sensor 84, der die Verriegelungsstellung oder Freigabestellung der Verriegelungseinrichtung 30 sensiert. Der Sensor 84 ist beispielsweise ein Schalter, der die jeweilige Axialposition des Sperrbolzens 31 abtastet. Wenn der Sperrbolzen 31 außerhalb der Verriegelungsstellung ist oder der Sensor 81 die Nicht-Betätigungsstellung beziehungsweise Nicht-Blockierstellung der Betätigungseinrichtung 40 ermittelt, wird dies zweckmäßigerweise durch das optische Anzeigemittel 82, das somit eine Warnfunktion ausübt, angezeigt. Der Sensor 84 ist beispielsweise über eine Leitung 83 mit der Betätigungseinrichtung 40 verbunden. Weiterhin ist die Signalisierungseinrichtung 80 mit einer entfernten Anzeigeeinrichtung 86 verbunden, beispielsweise im Armaturenbereich des Zugfahrzeugs 16. Die Leitung 83 ist dazu beispielsweise teilweise in die Leitung 85 durchgeschleift. Die Anzeigeeinrichtung 86 kann optische und zweckmäßigerweise auch akustische Anzeigemittel 87 aufweisen, beispielsweise einen Warnsummer, der ertönt, wenn die Verriegelungseinrichtung 30 außerhalb der Verriegelungsstellung oder die Betätigungseinrichtung 40 außerhalb der Blockierstellung ist.

Es versteht sich, dass die Signalisierungseinrichtung 80 auch zu einer positiven Signalisierung ausgestaltet sein kann, die eine korrekte Verriegelung der Verriegelungseinrichtung 30 und/oder die Blockierstellung der Betätigungseinrichtung 40 signalisiert.

Ferner kann anstelle des Betätigungsgetriebes 60 auch ein Betätigungsgetriebe 60' vorgesehen sein, das eine Schrägfläche 88 an einer dem Gehäuse 44 zugewandten Stirnseite des Handgriffteils 51 aufweist, die an einer korrespondierenden Schrägfläche 89 am Gehäuse 44 anliegt und bei einer Drehbetätigung des Handgriffteils 51 eine Axialverstellung des Zahnradteils 49 bewirkt.

## Patentansprüche

1. Anhängekupplung mit einem an einem Zugfahrzeug befestigten oder befestigbaren Halter (11), einem an dem Halter (11) mit einer Verriegelungseinrichtung (30) zumindest in einer zum Ziehen eines Anhängers (14) vorgesehenen Arbeitsstellung verriegelbaren, einen Kugelkopf (13) aufweisenden Kugelhals (12) und einer Betätigungseinrichtung (40) zur Betätigung der Verriegelungseinrichtung (30) zwischen einer Verriegelungsstellung, bei der die Verriegelungseinrichtung (30) den Kugelhals (12) an dem Halter (11) verriegelt, und einer Freigabestellung, bei der die Verriegelungseinrichtung (30) den Kugelhals (12) zu einem Bewegen in eine für den Nichtgebrauch vorgesehene Ruhestellung frei gibt, wobei die Betätigungseinrichtung (40) ein auf ein Betätigungsorgan (41) zum Betätigen der Verriegelungseinrichtung (30) zwischen der Verriegelungsstellung und der Freigabestellung wirkendes Zahnrad-Getriebe (48) mit einem Zahnradteil (49) aufweist, das durch eine Axialverstellung zwischen einer Betätigungsstellung (B), in der ein Zahnradabschnitt (54) des Zahnradteils (49) mit einem am Ende des Betätigungsorgans (41) angeordneten Betätigungsorgan-Zahnabschnitt (50) kämmt, und einer Nicht-Betätigungsstellung (N) verstellbar ist, in der der Zahnradabschnitt (54) außer Eingriff mit dem Betätigungsorgan-Zahnabschnitt (50) ist, **dadurch gekennzeichnet, dass** die Betätigungseinrichtung (40) ein Betätigungsgetriebe (60) aufweist, das eine Drehung einer Betätigungswelle zur Drehbetätigung des Zahnradteils (49) in eine Axialverstellung des Zahnradteils (49) in Richtung der Betätigungsstellung (B) umsetzt.

2. Anhängekupplung nach Anspruch 1, **dadurch gekennzeichnet, dass** sie ein Handgriffteil (51) zu einer Drehbetätigung des Betätigungsgetriebes (60) aufweist.

3. Anhängekupplung nach Anspruch 2, **dadurch gekennzeichnet, dass** das Handgriffteil (51) bei der Drehbetätigung ortsfest längs seiner Drehachse (52) axial ist.

4. Anhängekupplung nach Anspruch 2 oder 3, **dadurch gekennzeichnet, dass** das Betätigungsgetriebe (60) zumindest teilweise in einem Innenraum (68) des Handgriffteils (51) angeordnet ist.

5. Anhängekupplung nach einem der vorhergehenden Ansprüche, **dadurch gekennzeichnet, dass** das Betätigungsgetriebe (60) eine Kulissenführung (61) mit einer zumindest abschnittsweise schräg verlaufenden Kulisse (62) aufweist, in der ein Führungsvorsprung (63) geführt ist.

6. Anhängekupplung nach einem der Ansprüche 2 bis 5, **dadurch gekennzeichnet, dass** die Kulisse (62) oder der Führungsvorsprung (63) unmittelbar an dem Handgriffteil (51) oder einem mit dem Handgriffteil (51) drehfest verbundenen Führungsbauteil (67) angeordnet ist.

7. Anhängekupplung nach einem der vorhergehenden Ansprüche, **dadurch gekennzeichnet, dass** das Betätigungsgetriebe (60) ein Zahngetriebe umfasst.

8. Anhängekupplung nach Anspruch 7, **dadurch gekennzeichnet, dass** das Zahngetriebe eine Schrägzahnung mit schräg zu der Drehachse des Zahnradteils (49) verlaufenden Zähnen aufweist.

9. Anhängekupplung nach einem der vorhergehenden Ansprüche, **dadurch gekennzeichnet, dass** das Betätigungsgetriebe (60) mindestens eine Hohlwelle (66) aufweist, in der eine Innenwelle (65) drehbar gelagert ist, mit der das Zahnradteil (49) drehfest verbunden ist oder die das Zahnradteil (49) umfasst.

10. Anhängekupplung nach einem der Ansprüche 2 bis 9, **dadurch gekennzeichnet, dass** das Handgriffteil (51), die Hohlwelle (66), die Innenwelle (65) und das Zahnradteil (49) koaxial sind.

11. Anhängekupplung nach einem der Ansprüche 2 bis 10, **dadurch gekennzeichnet, dass** das Betätigungsgetriebe (60) mindestens eine zwischen dem Handgriffteil (51) und einem Gehäuse (44) der Betätigungseinrichtung (40) wirksame, schräg zu der Drehachse des Zahnradteils (49) verlaufende Schrägfläche (88, 89) aufweist.

12. Anhängekupplung nach einem der vorhergehenden Ansprüche, **dadurch gekennzeichnet, dass** das Zahnradteil (49) einen Blockierabschnitt (55) aufweist, der in einer Blockierstellung des Zahnradteils (49) eine Bewegung des Betätigungsorgan-Zahnabschnitts (50) aus einer der Verriegelungsstellung entsprechenden Axialposition in Richtung der Freigabestellung blockiert.

13. Anhängekupplung nach Anspruch 12, **dadurch gekennzeichnet, dass** eine Achse zur Axialverstellung des Zahnradteils (49) zwischen der Betätigungsstellung (B) und der Blockierstellung einen solchen Winkel zu einer Verstellachse des Betätigungsorgan-Zahnabschnitts (50) aufweist, dass bei Belastung des Kugelhalses (12) eine Rückwirkung über das Betätigungsorgan (41), das vorzugsweise ein Zug-/Druck-Bowdenzug ist, keine Axialverstellung des Zahnradteils (49) aus der Blockierstellung in Betätigungsstellung (B) bewirkt.

14. Anhängekupplung nach einem der vorhergehenden Ansprüche, **dadurch gekennzeichnet, dass** die Betätigungseinrichtung (40) eine Federanordnung (71) aufweist, die auf das Zahnradteil (49) in Richtung der Nicht-Betätigungsstellung, insbesondere der Blockierstellung, wirkt.

15. Anhängekupplung nach Anspruch 14, **dadurch gekennzeichnet, dass** die Federanordnung (57) eine Feder (72) umfasst, die sich einerseits an dem Handgriffteil (51) und andererseits an dem Zahnradteil (49) drehfest abstützt.

16. Anhängekupplung nach einem der vorhergehenden Ansprüche, **dadurch gekennzeichnet, dass** der Kugelhals (12) in der Freigabestellung von dem Halter (11) entfernbar oder an dem Halter zwischen der Arbeitsstellung und der Ruhestellung beweglich gelagert ist.

17. Anhängekupplung nach einem der vorhergehenden Ansprüche, **dadurch gekennzeichnet, dass** die Betätigungseinrichtung (40) eine elektrische Signalisierungseinrichtung zum Signalisieren der Nicht-Betätigungsstellung, insbesondere der Blockierstellung, und/oder der Betätigungsstellung (B) des Zahnradteils (49) aufweist.

## Claims

1. Trailer coupling, comprising a holder (11) attached or attachable to a trailer (11), a ball neck (12) fitted with a hitch ball (13) and lockable on the holder (11) by a locking device (30) at least in a working position provided for pulling a trailer, and an actuating device (40) for actuating the locking device (30) between a locked position in which the locking device (30) locks the ball neck (12) on the holder (11) and a release position in which the locking device (30) releases the ball neck (12) for moving into an inoperative position provided for non-use, wherein the actuating device (40) comprises a gear unit (48) acting on an actuating element (41) for moving the locking device (30) between the locked position and the release position and having a gear part (49) which, by axial displacement, is movable between an operating position (B) in which a tooth section (54) of the gear part (49) meshes with an actuating element tooth section (50) located at the end of the actuating element (41) and a non-operating position (N) in which the tooth section (54) is disengaged from the actuating element tooth section (50), **characterised in that** the actuating device (40) comprises an actuating gear (60) which converts a rotation of a shaft for the rotary actuation of the gear part (49) into an axial displacement of the gear part (49) towards the operating position (B).

2. Trailer coupling according to claim 1, **characterised in that** it comprises a handle part (51) for the rotary actuation of the actuating gear (60).

3. Trailer coupling according to claim 2, **characterised in that** is axially fixed along its axis of rotation (52) in the process of rotary actuation.

4. Trailer coupling according to claim 2 or 3, **characterised in that** the actuating gear (60) is at least partially located in an interior (68) of the handle part (51).

5. Trailer coupling according to any of the preceding claims, **characterised in that** the actuating gear (60) comprises a gate-type guide (61) with a gate (62) which extends at an angle at least in sections and in which a guide projection (63) is guided.

6. Trailer coupling according to any of claims 2 to 6, **characterised in that** the gate (62) or the guide projection (63) is provided directly on the handle part (51) or on a guide component (67) non-rotatably joined to the handle part (51).

7. Trailer coupling according to any of the preceding claims, **characterised in that** the actuating gear (60) comprises a gearing.

8. Trailer coupling according to claim 7, **characterised in that** the gearing has helical toothing with teeth extending at an angle to the axis of rotation of the gear part (49).

9. Trailer coupling according to any of the preceding claims, **characterised in that** the actuating gear (60) comprises at least one hollow shaft (66) in which an inner shaft (65) to which the gear part (49) is non-rotatably connected or which includes the gear part (49) is rotatably installed.

10. Trailer coupling according to any of claims 2 to 9, **characterised in that** the handle part (51), the hollow shaft (66), the inner shaft (65) and the gear part (49) are coaxial.

11. Trailer coupling according to any of claims 2 to 10, **characterised in that** the actuating gear (60) has at least one inclined surface (88, 89) acting between the handle part (51) and a housing (44) of the actuating device (40) and extending at an angle to the axis of rotation of the gear part (49)

12. Trailer coupling according to any of the preceding claims, **characterised in that** the gear part (49) comprises a blocking section (55) which, in a blocking position of the gear part (49), blocks a movement of the actuating element tooth section (50) from an axial position corresponding to the locked position towards the release position.

13. Trailer coupling according to claim 12, **characterised in that** an axis for the axial adjustment of the gear part (49) between the operating position (B) and the blocking position has such an angle relative to an adjusting axis of the actuating element gear section (50) that, if the ball neck (12) is loaded, a reaction via the actuating element (41), which is preferably a push-pull control cable, does not result in a axial movement of the gear part (49) from the blocking position into the operating position (B).

14. Trailer coupling according to any of the preceding claims, **characterised in that** the actuating device (40) comprises a spring arrangement (71) acting on the gear part (49) in the direction of the non-operating position, in particular the blocking position.

15. Trailer coupling according to claim 14, **characterised in that** the spring arrangement (57) comprises a spring (72) one end of which is non-rotatably supported on the handle part (51) while the other end is non-rotatably supported on the gear part (49).

16. Trailer coupling according to any of the preceding claims, **characterised in that** the ball neck (12) can be removed from the holder (11) in the release position or is mounted on the holder for movement between the working position and the idle position.

17. Trailer coupling according to any of the preceding claims, **characterised in that** the actuating device (40) comprises an electric signalling device for signalling the non-operating position, in particular the blocking position, and/or the operating position (B) of the gear part (49).

## Revendications

1. Attelage, avec un support (11) fixé ou pouvant être fixé sur un véhicule tracteur, avec un col de cygne (12) présentant une boule d'attelage (13) et pouvant, au moyen d'un dispositif de verrouillage (30), être verrouillé sur le support (11) au moins dans une position de travail prévue pour tirer une remorque (14), et avec un dispositif d'actionnement (40) pour actionner le dispositif de verrouillage (30) entre une position de verrouillage, dans laquelle le dispositif de verrouillage (30) verrouille le col de cygne (12) sur le support (11), et une position de libération, dans laquelle le dispositif de verrouillage (30) libère le col de cygne (12) pour son déplacement dans une position de repos prévue pour la non-utilisation, le dispositif d'actionnement (40) présentant un engrenage (48) agissant sur un organe d'actionnement (41) pour actionner le dispositif de verrouillage (30) entre la position de verrouillage et la position de libération et pourvu d'un élément d'engrenage (49) qui, par un déplacement axial, peut être déplacé entre une position d'actionnement (B), dans laquelle une partie d'engrenage (54) de l'élément d'engrenage (49) engrène avec une partie dentée d'organe d'actionnement (50) disposée à l'extrémité de l'organe d'actionnement (41), et une position de non-actionnement (N), dans laquelle la partie d'engrenage (54) est désengagée de la partie dentée d'organe d'actionnement (50), **caractérisé en ce que** le dispositif d'actionnement (40) présente un mécanisme de transmission d'actionnement (60) qui transforme une rotation d'un arbre d'actionnement, pour l'actionnement en rotation de l'élément d'engrenage (49), en un déplacement axial de l'élément d'engrenage (49) en direction de la position d'actionnement (B).

2. Attelage selon la revendication 1, **caractérisé en ce qu'**il présente un élément formant poignée (51) pour un actionnement par rotation du mécanisme de transmission d'actionnement (60).

3. Attelage selon la revendication 2, **caractérisé en ce que** l'élément formant poignée (51) est, lors de l'actionnement par rotation, axialement fixe le long de son axe de rotation (52).

4. Attelage selon la revendication 2 ou 3, **caractérisé en ce que** le mécanisme de transmission d'actionnement (60) est au moins pour partie disposé dans un espace intérieur (68) de l'élément formant poignée (51).

5. Attelage selon l'une des revendications précédentes, **caractérisé en ce que** le mécanisme de transmission d'actionnement (60) présente un guide à coulisse (61) avec une coulisse (62) s'étendant au moins pour partie en oblique, dans laquelle est guidée une saillie de guidage (63).

6. Attelage selon l'une des revendications 2 à 5, **caractérisé en ce que** la coulisse (62) ou la saillie de guidage (63) est disposée directement sur l'élément formant poignée (51), ou sur un élément de guidage (67) lié en rotation à l'élément formant poignée (51).

7. Attelage selon l'une des revendications précédentes, **caractérisé en ce que** le mécanisme de transmission d'actionnement (60) comprend un mécanisme denté.

8. Attelage selon la revendication 7, **caractérisé en ce que** le mécanisme denté présente une denture oblique avec des dents s'étendant en oblique par rapport à l'axe de rotation de l'élément d'engrenage (49).

9. Attelage selon l'une des revendications précédentes, **caractérisé en ce que** le mécanisme de transmission d'actionnement (60) présente au moins un arbre creux (66) dans lequel est monté à rotation un arbre intérieur (65), avec lequel est lié en rotation l'élément d'engrenage (49) ou qui comprend l'élément d'engrenage (49).

10. Attelage selon l'une des revendications 2 à 9, **caractérisé en ce que** l'élément formant poignée (51), l'arbre creux (66), l'arbre intérieur (65) et l'élément d'engrenage (49) sont coaxiaux.

11. Attelage selon l'une des revendications 2 à 10, **caractérisé en ce que** le mécanisme de transmission d'actionnement (60) présente au moins une surface oblique (88, 89), s'étendant en oblique par rapport à l'axe de rotation de l'élément d'engrenage (49) et active entre l'élément formant poignée (51) et un boîtier (44) du dispositif d'actionnement (40).

12. Attelage selon l'une des revendications précédentes, **caractérisé en ce que** l'élément d'engrenage (49) présente une partie de blocage (55) qui, dans une position de blocage de l'élément d'engrenage (49), empêche un mouvement de la partie dentée d'organe d'actionnement (50) en direction de la position de libération à partir d'une position axiale correspondant à la position de verrouillage.

13. Attelage selon la revendication 12, **caractérisé en ce qu'**un axe pour le déplacement axial de l'élément d'engrenage (49) entre la position d'actionnement (B) et la position de blocage forme, avec un axe de déplacement de la partie dentée d'organe d'actionnement (50), un angle tel que, lors de la sollicitation du col de cygne (12), une réaction via l'organe d'actionnement (41), qui est de préférence un câble Bowden de traction/compression, ne produit pas de déplacement axial de l'élément d'engrenage (49) de la position de blocage dans la position d'actionnement (B).

14. Attelage selon l'une des revendications précédentes, **caractérisé en ce que** le dispositif d'actionnement (40) présente un ensemble de ressort (71) qui agit sur l'élément d'engrenage (49) en direction de la position de non-actionnement, notamment de la position de blocage.

15. Attelage selon la revendication 14, **caractérisé en ce que** l'ensemble de ressort (57) comprend un ressort (72) qui s'appuie en solidarité de rotation d'une part sur l'élément formant poignée (51) et d'autre part sur l'élément d'engrenage (49).

16. Attelage selon l'une des revendications précédentes, **caractérisé en ce que** le col de cygne (12) peut être déposé du support (11) dans la position de libération, ou est monté sur le support à déplacement entre la position de travail et la position de repos.

17. Attelage selon l'une des revendications précédentes, **caractérisé en ce que** le dispositif d'actionnement (40) présente un dispositif de signalisation électrique pour signaler la position de non-actionnement, notamment la position de blocage, et/ou la position d'actionnement (B) de l'élément d'engrenage (49).
